# EUROPEAN PATENT APPLICATION

(11) **EP 2 717 624 A1**
(43) Date of publication of application: **09.04.2014**
(21) Application number: 11866963.9
(22) Date of filing: 30.05.2011
(51) Int. Cl.: H04W 36/04, H04W 24/08

(54) **WIRELESS COMMUNICATION SYSTEM, BASE STATION, GATEWAY, AND WIRELESS COMMUNICATION METHOD**

(71) Applicant: Fujitsu Limited, Kawasaki-shi, Kanagawa 211-8588 (JP)
(72) Inventor: NITTA, Daisuke, Kawasaki-shi Kanagawa 211-8588 (JP); KAWAI, Hiromitsu, Kawasaki-shi Kanagawa 211-8588 (JP); KOBAYASHI, Kazunari, Kawasaki-shi Kanagawa 211-8588 (JP)
(74) Representative: Lewin, David Nicholas
(86) International application number: PCT/JP2011/062424
(87) International publication number: WO 2012/164675

(57) **Abstract**

A wireless communications system (1) includes a SeGW (50), a femto base station (10), and a macro base station (40). The SeGW (50) is coupled to a higher-level station. The femto base station (10) is coupled to the SeGW (50) through a wired broadband connection (N1). The macro base station (40) is coupled to the SeGW (50) through a dedicated line (N3). The femto base station (10) measures the quality of the wired broadband connection (N1) using first time information and second time information when a mobile station performs a handover from the macro base station (40) to the femto base station (10). The first time information represents the time when data forwarded from the macro base station (40) to the femto base station (10) is transmitted. The second time information represents the time when the data is received.

## Description

### [Technical Field]

The present invention relates to a wireless communications system, a base station, a gateway, and a wireless communications method.

### [Background Art]

Recently, femto base stations serving as microcompact base station devices have been developed along with the development of wireless communication technologies. The femto base stations are different from typical base stations for mobile phones (macro base stations) and assumed to be used in specific communication areas. Femto base stations have smaller diameters than macro base stations, however, installation in in-house facilities is assumed such as in general homes, small offices, and restaurants. Therefore, the femto base stations are accessible by a plurality of mobile stations at the same time that are permitted to communicate with the femto base stations. Femto base stations are installed in residential areas or tall buildings, which is difficult to be covered by existing macro base stations, whereby operation costs are suppressed and in-house area coverage ratio can be increased. High demand is expected for femto base stations not only for the conventional 3 generation (3G) technology such as the wideband-code division multiple access (W-CDMA) technology, but also for the long term evolution (LTE) technology of which area coverage ratio is insufficient because the service of the LTE technology has just begun.

### [Citation List]

### [Patent Literature]

Patent Literature 1: Japanese Laid-open Patent Publication No. 2009-260895
Patent Literature 2: Japanese Laid-open Patent Publication No. 2006-304288
Patent Literature 3: Japanese National Publication of International Patent Application No. 2010-522516

### [Summary of Invention]

### [Technical Problem]

With the above-described technologies, the following issues have been found. In wireless communications with the LTE technology, the area coverage ratio by the macro base stations is insufficient. It is important that the insufficient area is covered by femto base stations in the LTE system until the area coverage ratio is increased. If the area coverage ratio by the femto base stations in the LTE system is sufficiently increased, it is assumed that communications using femto base stations are more preferred than communications using macro base stations in general homes, small offices, and restaurants, in particular from a viewpoint of maintaining a high quality communication.

In the above-described environment, the mobile station can wirelessly communicate with both the macro base station and the femto base station. In the communication with the macro base station, bandwidth guaranteed circuits are used, whereby a certain level of communication quality is ensured. By contrast, in the communication with the femto base station, wired broadband connections are used such as a fiber-optic line and an asymmetric digital subscriber line (ADSL) circuit. The bandwidth of these lines is not guaranteed and the lines are shared with a large number of subscribers at the same time for use. If the traffic is congested in the line, the line quality may vary, which may cause the reduction of communication quality depending on mobile stations.

The technology disclosed herein has been made in view of the conventional circumstances and its object is to provide a wireless communications system, a base station, a gateway, and a wireless communications method, capable of suppressing the reduction of the communication quality due to wired line congestion.

### [Solution to Problem]

To solve the above problem and attain the object, a radio communications system disclosed in this application, according to an aspect, includes a gateway, a first base station, and a second base station. The gateway is coupled to a higher-level station. The first base station is coupled to the gateway through a first line. The second base station is coupled to the gateway through a second line. When a mobile station performs a handover from the first base station to the second base station, the gateway or the second base station measures quality of a line, using first time information representing a time when data forwarded from the first base station to the second base station is transmitted and second time information representing a time when the data is received.

### [Advantageous Effects of Invention]

An aspect of a wireless communications system disclosed in the present application can provide the advantageous effect of suppressing the reduction of communication quality due to wired line congestion.

### [Brief Description of Drawings]

FIG. 1 is a diagram illustrating the outline configuration of a wireless communications system according to an embodiment of the present invention.
FIG. 2 is a diagram illustrating the configurations of a femto base station, a macro base station, and a security gateway (SeGW) according to the embodiment.
FIG. 3 is a diagram illustrating the hardware configuration of the femto base station according to the embodiment.
FIG. 4 is a diagram illustrating the hardware configuration of the SeGW according to the embodiment.
FIG. 5 is a diagram illustrating an example of the configuration of an IP header of a forward packet according to the embodiment.
FIG. 6 is a diagram illustrating an example of user data protocol stack when the communication quality in the down direction is measured.
FIG. 7 is a diagram illustrating an example of user data protocol stack when the communication quality in the up direction is measured.
FIG. 8 is a diagram illustrating an example of a communication quality measurement table of a wired broadband connection according to the embodiment.
FIG. 9 is a diagram illustrating an example of line quality information of the wired broadband connection according to the embodiment.
FIG. 10 is a diagram illustrating an aspect in which the line quality information is notified to a mobile station and shared between femto base stations according to the embodiment.
FIG. 11 is a diagram illustrating an example of a protocol used for transmitting the line quality information from the SeGW to a femto base station according to the embodiment.
FIG. 12 is a diagram illustrating a transferring route for packets transferred when the mobile station performs an X2 handover from a femto base station to another femto base station according to the embodiment.
FIG. 13 is a diagram for explaining measurement processing of the communication quality in the down direction according to the embodiment.
FIG. 14 is a diagram for explaining measurement processing of the communication quality in the up direction according to the embodiment.
FIG. 15 is a diagram for explaining measurement processing of the line quality in the down direction when the X2 handover occurs.
FIG. 16 is a diagram for explaining measurement processing of the line quality in the up direction when the X2 handover occurs.
FIG. 17 is a diagram for explaining processing of the mobile station to perform the X2 handover from a femto base station 10 to a femto base station 20 based on the measurement result of the line quality.
FIG. 18 is a diagram for explaining processing of the mobile station to perform the X2 handover from the femto base station 10 to the femto base station 30 based on the measurement result of the line quality.
FIG. 19 is a diagram for explaining processing of the mobile station to perform the X2 handover from the femto base station 10 to a macro base station 40 based on the measurement result of the line quality.

### [Embodiments for Carrying Out the Invention]

Exemplary embodiments of a wireless communications system, a base station, a gateway, and a wireless communications method disclosed herein are described below in detail with reference to the accompanying drawings. However, the wireless communications system, the base station, the gateway, and the wireless communications method disclosed herein are not limited to the embodiments described below.

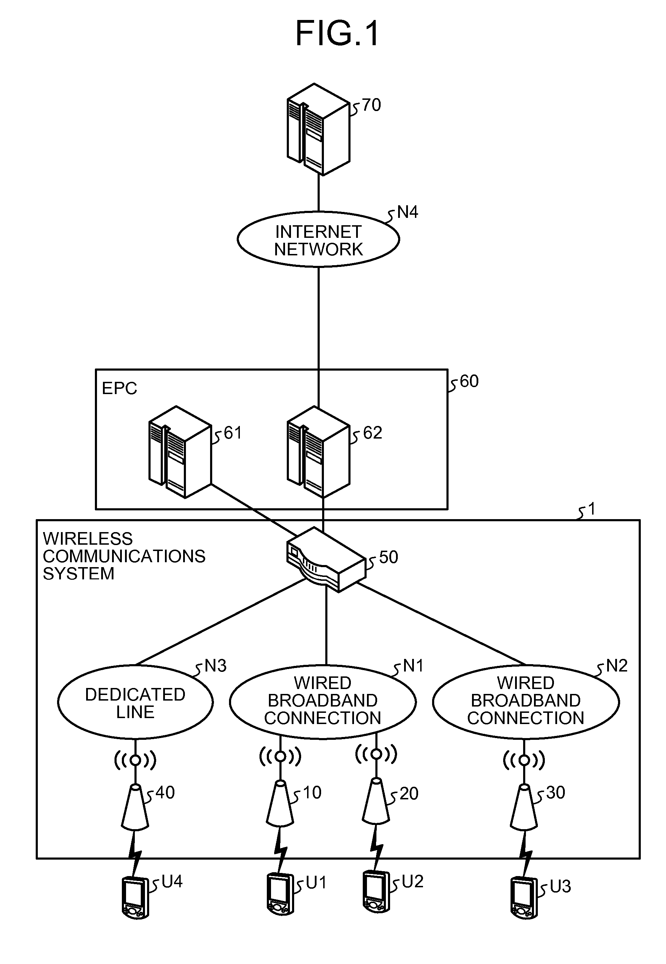

The configuration of a wireless communications system according to an embodiment disclosed in the present application will be described at first. FIG. 1 is a diagram illustrating the outline configuration of a wireless communications system according to an embodiment of the present invention. As illustrated in FIG. 1, this wireless communications system 1 includes at least femto base stations 10, 20, and 30, a macro base station 40, and a security gateway (SeGW) 50. The femto base stations 10, 20, and 30 are base station devices that provide a long term evolution (LTE) service. The communication area of the femto base stations 10, 20, and 30 is narrower than the macro base station 40 that also provides a long term evolution (LTE) service, the femto base stations 10, 20, and 30 are therefore microcompact base station devices. The macro base station 40 accommodates a large number of mobile stations. The macro base station 40 is coupled to the dedicated line N3, thereby ensuring communication bands for the mobile stations coupled to the macro base station 40 itself wirelessly (e.g., a mobile station U4). By contrast, the communication bands for mobile stations (e.g., mobile stations U1 to U3) coupled to the femto base stations 10, 20, and 30 respectively depend on the traffic state of wired broadband connections N1 and N2.

The mobile stations U1, U2, and U3 are wirelessly coupled to the femto base stations 10, 20, and 30 respectively. The mobile station U4 is wirelessly coupled to the macro base station 40. In addition, the femto base stations 10 and 20 are coupled to the SeGW 50 through a typical wired broadband connection N1, and the femto base station 30 is coupled to the SeGW 50 through a wired broadband connection N2. Furthermore, the macro base station 40 is coupled to the SeGW 50 through a dedicated line N3 provided by a mobile network operator (also known as a mobile network carrier). The SeGW 50 is coupled to the Internet network N4 through an evolved packet core (EPC) 60 having a mobility management entity (MME) 61 and a serving/packet data network gateway (S/PGW) 62, thereby forming a core network with the EPC60. A Web server 70 is coupled to an Internet network N4, for example, and performs packet communication with the mobile stations U1 to U4.

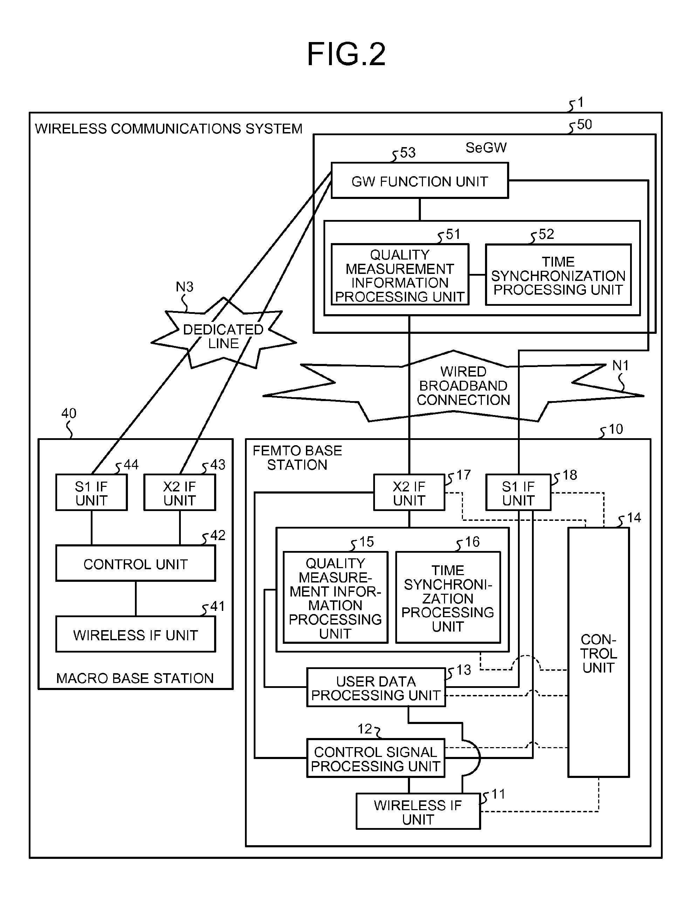

FIG. 2 is a diagram illustrating the configurations of the femto base station 10, the macro base station 40, and the SeGW 50. As illustrated in FIG. 2, the femto base station 10 includes a wireless interface (IF) unit 11, a control signal processing unit 12, a user data processing unit 13, a control unit 14, a quality measurement information processing unit 15, a time synchronization processing unit 16, an X2 IF unit 17, and an S1 IF unit 18. These components are coupled to each other in such a manner that signals and data can be input and output unidirectionally or bidirectionally therebetween.

The wireless interface unit 11 performs transmission and reception of messages including forward packets between mobile stations including the mobile station U1 under the femto base station 10. The control signal processing unit 12 processes control signals in the femto base station 10 and controls signals from the mobile stations or a high-level network. The user data processing unit 13 processes user data stored in an Internet Protocol (IP) header in a packet received by the wireless interface unit 11. The control unit 14 controls the components of the femto base station 10 integrally.

The quality measurement information processing unit 15 measures the communication quality of the wired broadband connection N1 to which the femto base station 10 is coupled based on quality measurement information of the wired broadband connection N1. For example, the quality measurement information processing unit 15 reads a time stamp as a piece of quality measurement information from the IP header of a forward packet transmitted from the SeGW 50 and measures the quality of the line in the down direction such as the delay time and the throughput of the packet transmission based on the time stamp. The quality measurement information processing unit 15 exchanges the communication quality information of the wired broadband connection N1 with another femto base station 20 coupled to the same wired broadband connection N1 to which the femto base station 10 is coupled.

The time synchronization processing unit 16 synchronizes the time information included in the femto base station 10 and the time information included in the SeGW 50. The X2 IF unit 17 is a wired interface that couples the femto base station 10 and the SeGW 50, and performs transmission and reception of messages including a forward packet to and from the SeGW 50. The femto base station 10 performs transmission and reception of control signals and user data using the X2 IF unit 17 when an X2 handover is performed. In the same manner, the S1 IF unit 18 is a wired interface that couples the femto base station 10 and the SeGW 50, and performs transmission and reception of messages including forward packets to and from the SeGW 50. The femto base station 10 performs transmission and reception of control signals and user data using the S1 IF unit 18 when an S1 handover is performed.

The configuration of the femto base station 10 has been described above representatively. The femto base stations 20 and 30 have the same configuration as the femto base station 10, therefore, detailed illustration and description of the configuration of the femto base stations 20 and the 30 are omitted.

As illustrated in FIG. 2, the macro base station 40 includes a wireless interface unit 41, a control unit 42, an X2 IF unit 43, and an S1 IF unit 44. These components are coupled to each other in such a manner that signals and data can be input and output unidirectionally or bidirectionally therebetween. The wireless interface unit 41 performs transmission and reception of messages including forward packets between mobile stations under the macro base station 40 including the mobile station U4. The control unit 42 processes control signals in the macro base station 40 and controls signals from the mobile stations or a high-level network. The X2 IF unit 43 and the S1 IF unit 44 are wired interfaces that couple the macro base station 40 and the SeGW 50. The X2 IF unit 43 performs transmission and reception of messages including forward packets to and from the SeGW 50 when the X2 handover is performed. The S1 IF unit 44 performs transmission and reception of messages including forward packets to and from the SeGW 50 when the S1 handover is performed.

As illustrated in FIG. 2, the SeGW 50 includes a quality measurement information processing unit 51, a time synchronization processing unit 52, and a GW function unit 53. These components are coupled to each other in such a manner that signals and data can be input and output unidirectionally or bidirectionally. The quality measurement information processing unit 51 measures the communication quality of the wired broadband connection N1. The quality measurement information processing unit 51 provides quality measurement information (a time stamp) to the IP header of a forward packet received by the SeGW 50. The quality measurement information processing unit 51 measures the line quality in the up direction such as the delay time and the throughput of the packet transmission based on the time stamp provided in the femto base station 10. The time synchronization processing unit 52 synchronizes the time information included in the SeGW 50 and the time information included in the femto base station 10. The GW function unit 53 performs secret processing of an IP line that couples the femto base stations 10, 20, and 30, the macro base station 40, the MME 61, the S/PGW62 to each other. The GW function unit 53 also performs relay processing between the femto base station 10 and the macro base station 40.

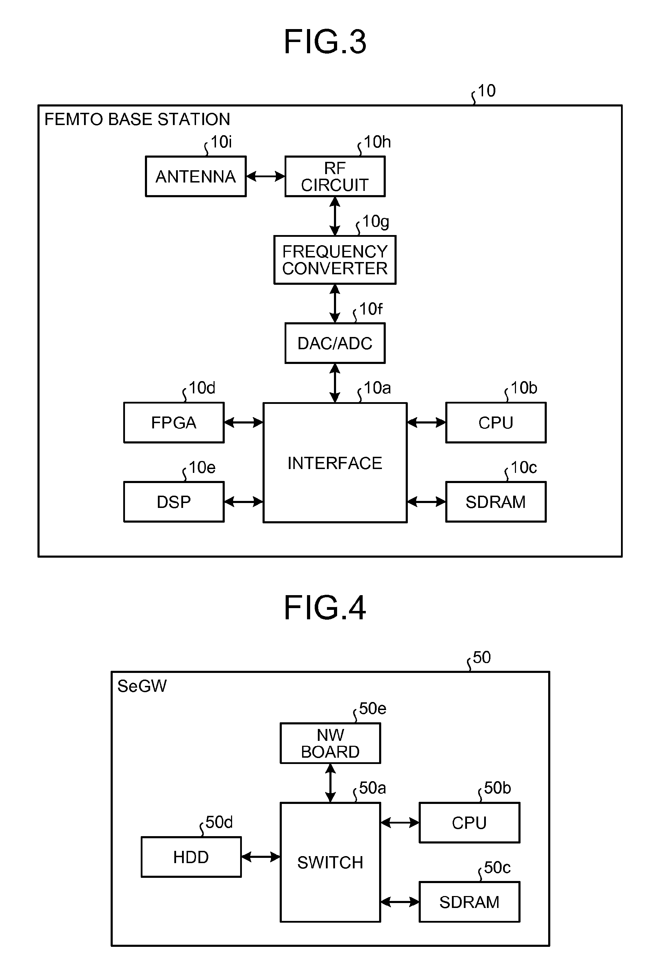

The following describes the hardware configurations of the femto base stations 10, 20, and 30, the macro base station 40, and the SeGW 50. FIG. 3 is a diagram illustrating the hardware configuration of the femto base station 10. As illustrated in FIG. 3, in the femto base station 10, a CPU 10b, an synchronous dynamic random access memory (SDRAM) 10c, a field programmable gate array (FPGA) 10d, and a digital signal processor (DSP) 10e are physically coupled to each other through an interface 10a such as a switch in such a manner that various types of signals and data can be input and output therebetween. The femto base station 10 physically includes a digital-to-analog converter (DAC)/analog-to-digital converter (ADC) 10f, a frequency converter 10g, and a radio frequency (RF) circuit 10h. The radio frequency circuit 10h has an antenna 10i. The hardware configuration of the femto base station 10 has been described above representatively. The femto base stations 20 and 30 and the macro base station 40 have the same hardware configuration as the femto base station 10, therefore, common numerals are assigned to similar components to the components described above, and illustration and detailed description of the configuration of the femto base stations 20 and 30 and the macro base station 40 are omitted.

The functional components of the femto base station 10 described above (refer to FIG. 2) are implemented with the following hardware (refer to FIG. 3). The wireless interface unit 11, the X2 IF unit 17, and the S1 IF unit 18 are implemented with the interface 10a, the DAC/ADC 10f, the frequency converter 10g, the radio frequency circuit 10h, and the antenna 10i as hardware. The control signal processing unit 12, the user data processing unit 13, the control unit 14, the quality measurement information processing unit 15, and the time synchronization processing unit 16 are implemented with the CPU 10b or the DSP 10e.

The functional components of the macro base station 40 described above (refer to FIG. 2) are implemented with the following hardware (refer to FIG. 3). The wireless interface unit 41, the X2 IF unit 43, and the S1 IF unit 44 are implemented with the interface 10a, the DAC/ADC 10f, the frequency converter 10g, the radio frequency circuit 10h, and the antenna 10i as hardware. The control unit 42 is implemented with the CPU 10b or the DSP 10e.

FIG. 4 is a diagram illustrating the hardware configuration of the SeGW 50. As illustrated in FIG. 4, in the SeGW 50, a central processing unit (CPU) 50b, a synchronous dynamic random access memory (SDRAM) 50c, a hard disk drive (HDD) 50d, and a network (NW) board 50e are physically coupled to each other through a switch 50a in such a manner that various types of signals and data can be input and output therebetween.

The functional components of the SeGW 50 described above (refer to FIG. 2) are implemented with the following hardware (refer to FIG. 4). The GW function unit 53 is implemented with a network board 50e as hardware. The quality measurement information processing unit 51 and the time synchronization processing unit 52 are implemented with the CPU 50b.

The following describes operations of a wireless communications system 1 according to the embodiment of the present invention. Firstly, an operation is described in which the wireless communications system 1 measures the communication quality of the wired broadband connection N1 (hereinafter, referred to as a "first operation"). Subsequently, another operation is described in which the wireless communications system 1 notifies the mobile stations U1 to U4 of the line quality information and shares the information with the femto base stations 10, 20, and 30 (hereinafter, referred to as a "second operation") After that, still another operation is described in which the wireless communications system 1 determines the availability of handover based on the line quality information, thereby avoiding the deterioration of the communication quality (hereinafter, referred to as a "third operation").

### (First Operation)

The first operation will be firstly described. The first operation is further categorized into the measurement processing of the communication quality in the down direction (the direction from the SeGW 50 toward the femto base station 10) and the measurement processing of the communication quality in the up direction (the direction from the femto base station 10 toward the SeGW 50).

The measurement processing of the communication quality in the down direction is firstly described assuming that the mobile station U4 under the macro base station 40 performs a handover to the femto base station 10. When the mobile station U4 performs the X2 handover to the femto base station 10, the macro base station 40 transmits a forward packet (forwarding data packet) to the femto base station 10. When the forward packet reaches the SeGW 50, the SeGW 50 provides a time stamp as data for measuring the communication quality to the IP header of the above-described forward packet, and forwards the forward packet to the femto base station 10 serving as a handover destination. That is, the forward packet is transmitted from the macro base station 40 through the SeGW 50 to the femto base station 10. After receiving the forward packet, the femto base station 10 obtains the above-described time stamp from the IP header of the packet and measures the communication quality of the wired broadband connection N1 based on the information of the time stamp. Specific measurement method of the communication quality will be described later. As the communication quality, the delay time, the throughput, and the fluctuation of the packet transmission are measured, for example. After the measurement, the femto base station 10 deletes the time stamp provided to the forward packets.

The measurement processing of the communication quality in the up direction is now described assuming that the mobile station U1 under the macro base station 10 performs a handover to the macro base station 40. When the mobile station U1 performs the X2 handover to the macro base station 40, femto base station 10 transmits a forward packet to the macro base station 40. When transmitting the forward packet to the SeGW 50, the femto base station 10 provides a time stamp as data for measuring the communication quality to the IP header of the above-described forward packet. That is, the forward packet is transmitted from the femto base station 10 through the SeGW 50 to the macro base station 40. After receiving the forward packet, the SeGW 50 obtains the above-described time stamp from the IP header of the packet and measures the communication quality of the wired broadband connection N1 based on the information of the time stamp. Specific measurement method of the communication quality will be described later. As the communication quality, the delay time, the throughput, and the fluctuation of the packet transmission are measured, for example. After the measurement, the SeGW 50 deletes time stamp provided to the forward packet. The SeGW 50 then forwards the forward packet from which the time stamp is deleted to the macro base station 40 serving as a handover destination of the mobile station. The SeGW 50 also notifies the femto base station 10 and the macro base station 40 of the measurement result of the communication quality of the wired broadband connection N1.

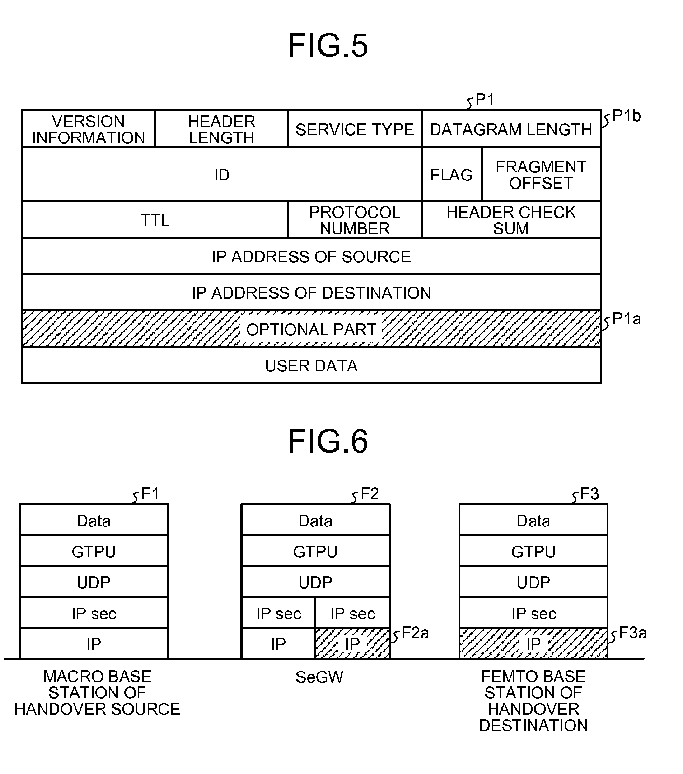

FIG. 5 is a diagram illustrating an example of the configuration of the IP header P1 of a forward packet. As illustrated in FIG. 5, the IP header P1 of a forward packet includes an optional part P1a (the shaded area). The time stamp as information for measuring the communication quality is provided to the optional part P1a by the SeGW 50 (for the measurement of the communication quality in the down direction) or the femto base station 10 (for the measurement of the communication quality in the up direction). Because the time stamp is the time information always synchronized between the SeGW 50 and the femto base station 10, the femto base station 10 and the SeGW 50 refer to the time stamp for achieving accurate measurement of the communication quality.

FIG. 6 is a diagram illustrating an example of user data protocol stack when the communication quality in the down direction is measured. As illustrated in FIG. 6, the forward packet F1 is transmitted without a time stamp from the macro base station 40 serving as a handover source. After receiving the forward packet F1, the SeGW 50 terminates the IP and the Internet Protocol security (IPsec) and provides a time stamp to an IP segment F2a (the shaded area in FIG. 6) corresponding to the optional part P1a of the IP header P1 (refer to FIG. 5). As a result, the forward packet F1 becomes the state represented with the forward packet F2 in the SeGW 50 as illustrated in FIG. 6. The forward packet F2 is forwarded from the SeGW 50 to the femto base station 10 serving as a handover destination. After receiving the forward packet F2, the femto base station 10 reads the time stamp recorded in the IP segment F2a. The femto base station 10 measures the communication quality of the wired broadband connection N1 by comparing the time of the stamp with the time when the femto base station 10 received the forward packet F2. After the measurement of the communication quality, the femto base station 10 deletes the time stamp from the IP segment F2a of the forward packet F2. As a result, the forward packet F2 becomes the state represented with the forward packet F3 as illustrated in FIG. 6 in the femto base station 10. That is, the IP segment of the forward packet becomes the same state represented with the forward packet F1 again, as illustrated with the IP segment F3a of the forward packet. This enables the mobile station U1 after the handover to receive the same packet as the forward packet transmitted by the macro base station 40 serving as a handover source.

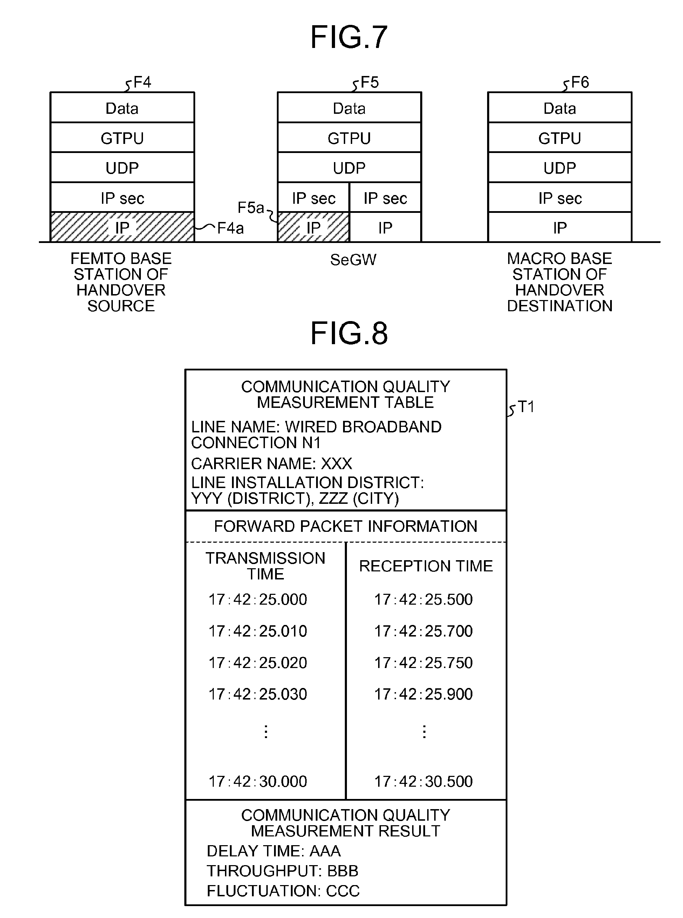

FIG. 7 is a diagram illustrating an example of user data protocol stack when the communication quality in the up direction is measured. A time stamp is provided to an optional part P1a of the IP header P1 of the forward packet in the femto base station 10 serving as a handover source. After that, as illustrated in FIG. 7, a forward packet F4 is transmitted in a state in which the time stamp is provided to an IP segment F4a (the shaded area) from the femto base station 10 serving as a handover source. After receiving the forward packet F4, the SeGW 50 that relays the forward packet terminates the IP and the IPsec. The SeGW 50 reads the time stamp recorded in the IP segment F5a of the forward packet F5 (the shaded area in FIG. 7). The SeGW 50 measures the communication quality of the wired broadband connection N1 by comparing the time of the stamp with the time when the SeGW 50 received the forward packet F4. After the measurement of the communication quality, the SeGW 50 deletes the time stamp from the IP segment F5a of the forward packet F5. As a result, the forward packet F5 becomes the state represented with the forward packet F6 as illustrated in FIG. 6 in the SeGW 50. That is, the forward packet becomes the same state represented with the forward packet F4 in the transmission again and reaches the macro base station 40 serving as a handover source. This enables the mobile station U4 after the handover to receive the same packet as the forward packet transmitted by the femto base station 10 serving as a handover source.

As described above, in the measurement of the communication quality in the down direction, the femto base station 10 deletes the time stamp that is no more needed from the IP header of the forward packet together with the end of the measurement. In the same manner, in the measurement of the communication quality in the up direction, after ending the measurement of the communication quality, the SeGW 50 deletes the time stamp that is no more needed from the forward packet. This enables the mobile station serving as a destination of the forward packet to receive the same forward packet as the packet on which the measurement is not performed, in the measurement of the communication quality in both the up and down directions. In other words, the mobile station can obtain the packet originally intended by the source of the packet. The wireless communications system 1 can therefore perform handover of the mobile station to a base station having a good communication quality without influencing the mobile station. As a result, the mobile station is capable of selecting the most appropriate base station without additional processing or load.

The following describes the measurement method of the communication quality of the wired broadband connection N1 in more detail with reference to FIG. 8. FIG. 8 is a diagram illustrating an example of measurement tables for the communication quality of the wired broadband connection N1. As illustrated in FIG. 8, in this communication quality measurement table T1, "wired broadband connection N1" is recorded as information representing the name of the targeted line for measurement. In addition, the formation is recorded such as the name of the carrier that operates and manages the targeted line for measurement, and the district where the targeted line for measurement is provided. In the communication quality measurement table T1, the transmission time and the reception time for each forward packet passing through the wired line represented with the name of the above-described line are associated with each other and recorded as forward packet information. The "transmission time" of the forward packet information is the time indicated with the above-described time stamp, and the "reception time" is the time when the femto base station 10 receives each forward packet.

The femto base station 10 measures the communication quality in the down direction using the quality measurement information processing unit 15 based on the transmission time and the reception time described above. Examples of indexes indicating the targeted communication quality for measurement in the femto base station 10 include the delay time, the throughput, and the fluctuation. The delay time is measured from the difference between the transmission time and the reception time for each forward packet. For example, when the transmission time is "17:42:25.000" and the reception time is "17:42:25.500", the delay time is measured as "500 ms". The delay time can be calculated for each forward packet, however, the delay time of the line may also be obtained by calculating the average of the delay times of a plurality of forward packets. For example, as illustrated in FIG. 8, the delay times of the forward packets are "500 ms", "690 ms", "730 ms", "870 ms", ..., and "500 ms". The delay time of the line is measured as "658 ms".

The throughput is calculated by dividing a datagram length P1b (refer to FIG. 5) stored in the IP header P1 of a forward packet by the difference between the transmission time and the reception time of the corresponding forward packet. For example, when the transmission time is "17:42:25.000" and the reception time is "17:42:25.500" for a forward packet, the quality measurement information processing unit 15 refers to the datagram length value of the forward packet and divides the value by the time difference "500 ms". The femto base station 10 may also use all of the forward packets recorded in the communication quality measurement table T1 for measuring the throughput. Specifically, the quality measurement information processing unit 15 sums up the datagram length values of all of the forward packets and divides the obtained value by the time requested for the transmission and reception of the forward packets (5.500 s = 17:42:30.500 - 17:42:25.000). This achieves more accurate measurement of the throughput.

The fluctuation can be measured using a well-known or commonly used calculation method, thus the detailed description thereof is omitted. The quality measurement information processing unit 15, for example, calculates a root-mean-square (RMS) of the delay time of each of the above-described forward packets, thereby obtaining a statistical index value of the fluctuation.

The measurement method of the communication quality in the down direction has been described. The communication quality in the up direction can be measured in the same method except for the difference of the transmission direction of the forward packets. That is, the SeGW 50 measures the delay time, the throughput, and the fluctuation as the communication quality in the up direction using the quality measurement information processing unit 51, based on the transmission time and the reception time.

### (Second Operation)

The following describes a second operation, that is, the wireless communications system 1 notifies the mobile stations U1 to U4 of the line quality information and shares the information with the femto base stations 10, 20, and 30.

The line quality information in the down direction will be firstly described. The femto base station 10 determines the line quality of the wired broadband connection N1 based on the measurement result of the above-described communication quality. The line quality is determined based on the comparison result of the communication quality of the wired broadband connection N1 and the communication quality of the dedicated line N3, which are potential handover destinations of the mobile station. If the communication quality of the wired broadband connection N1 is equal to or higher than the communication quality of the dedicated line N3, the line quality is determined as "○". If the communication quality of the wired broadband connection N1 is lower than the communication quality of the dedicated line N3, the line quality is determined as "×". This determination is performed using the communication quality measurement result as parameters, however, all of the delay time, the throughput, and the fluctuation are not necessarily used. For example, the femto base station 10 may determine that the line quality determination result is "○" if the throughput of the wired broadband connection N1 is equal to or higher than the throughput of the dedicated line N3. Alternatively, the femto base station 10 may determine that the line quality determination result is "○" only if all of the delay time, the throughput, and the fluctuation of the wired broadband connection N1 are equal to or higher than those of the dedicated line N3. The femto base station 10 may not necessarily determine the communication quality of the wired broadband connection N1 based on the comparison result with the communication quality of the dedicated line N3. Specifically, the femto base station 10 may set a predetermined threshold for each communication quality measurement result, and if any of or all of the delay time, the throughput, and the fluctuation exceed the threshold, the femto base station 10 may determine that the quality of the wired broadband connection N1 is "○".

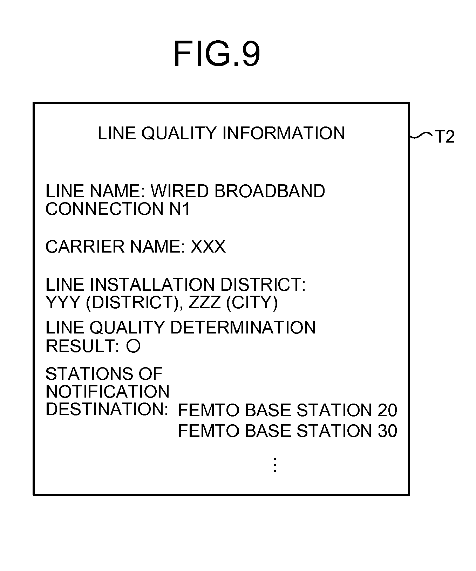

After determining the quality of the wired broadband connection N1, the femto base station 10 creates line quality information from the determination result. FIG. 9 is a diagram illustrating an example of information on the line quality of the wired broadband connection N1. As illustrated in FIG. 9, the line quality information T2 includes pieces of information representing a line name, a carrier name, and a line installation district as the similar information to the communication quality measurement table T1. In the line quality information T2, a symbol "○" is recorded representing that the above-described line quality determination result is good. In addition, "the femto base station 20" and "the femto base station 30" are recorded as information listing the base stations that become a notification destination of the line quality information T2.

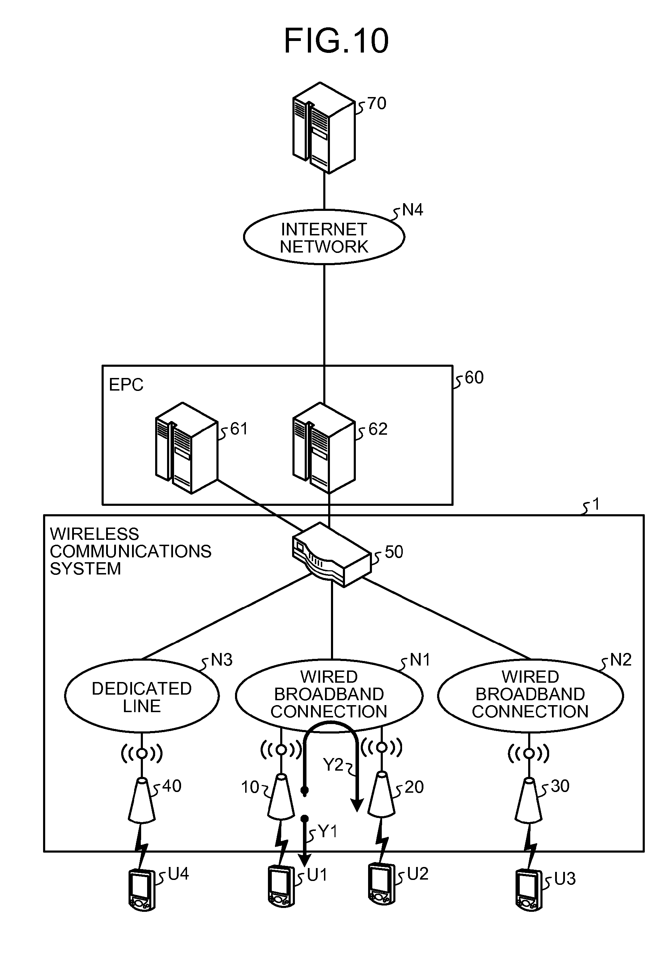

The line quality information is distributed with the femto base station 10 as the origin. As illustrated in FIG. 10, the femto base station 10 transmits the line quality information to the mobile station U1 under the femto base station 10 (refer to Arrow Y1) and another femto base station 20 coupled to the same wired broadband connection N1 (refer to Arrow Y2). This makes the line quality information of the wired broadband connection N1 be known to the mobile station immediately after the measurement of the communication quality, and be shared among the femto base stations.

The notification destination of the line quality information is not limited to the mobile station U1 and the femto base station 20 coupled to the femto base station 10 serving as a notification source. That is, the femto base station 10 may transmit the line quality information to a mobile station under the femto base station 20 (e.g., the mobile station U2) or another femto base station 30 coupled to another wired broadband connection N2 or a mobile station under the femto base station 30 (e.g., the mobile station U3). In addition, the femto base station 10 may transmit the line quality information to the macro base station 40 and a mobile station under the macro base station 40 (e.g., the mobile station U4). This makes it possible to use the line quality information as a determination index for determining the availability of handover or selecting a handover destination for not only base stations or mobile stations coupled to the wired broadband connection N1 but also base stations or mobile stations coupled to another line. The mobile stations U1 to U4 therefore refer to the line quality information, thereby communicating with a base station capable of communicating with higher communication quality. As a result, the communication quality of the wireless communications system 1 is increased overall.

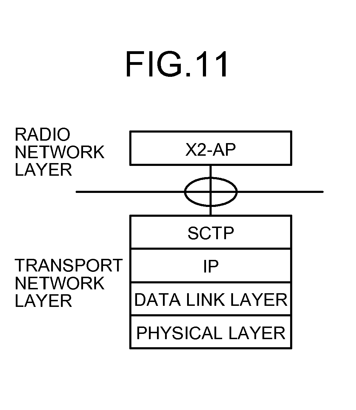

The line quality information in the up direction will now be described. The line quality information in the up direction is created by a different subject from the line quality information in the down direction. Specifically, the line quality information in the down direction is created by the femto base station 10, and the line quality information in the up direction is created by the SeGW 50 that has measured the communication quality in the up direction. The creation method of the line quality information in the up direction is the same as that of the line quality information in the down direction, thus the detailed description of the method is omitted. After creating the line quality information from the communication quality measurement result, the SeGW 50 transmits the line quality information to the femto base station 10 through the wired broadband connection N1. The line quality information is notified to the femto base station 10 according to the protocol of the X2-AP (application protocol) illustrated in FIG. 11 and using a message of 3GPP TS 36.422 (X2 signaling transport), for example. The line quality information that has reached the femto base station 10 is then distributed to the base stations and the mobile stations with the femto base station 10 as the origin, in the same manner as the line quality information in the down direction.

As described above, the line quality information obtained by the femto base station 10 is shared with the femto base stations coupled to the wired broadband connection N1 other than the femto base station 10 (e.g., the femto base station 20). These femto base stations therefore can obtain the line quality information in real time without performing quality measurement by themselves. Because the line quality information is distributed with the femto base station 10 as the origin, duplicate measurement on the same wired broadband connection N1 can be avoided. This reduces the number of times of the communication quality measurement, thereby reducing communication loads and processing loads involved with the communication quality measurement.

### (Third Operation)

The following describes a third operation, that is, the wireless communications system 1 determines the availability of handover based on the line quality information, thereby preventing deterioration of the communication quality.

Firstly, assuming that the mobile station U4 exists under the area of macro base station 40, the following describes a mode in which the femto base station 10 determines the availability of handover from the mobile station U4 based on the line quality information in the down direction. When the mobile station U4 tries to perform handover from the macro base station 40 to the femto base station 10, the femto base station 10 determines the quality of the wired broadband connection N1 based on the line quality information obtained from a forward packet. As a result of the determination, if the quality of the line is good, the femto base station 10 notifies the mobile station U1 and the femto base station 20 of the line quality information using the method described in the description of the second operation. The mobile station U4 completes the X2 handover from the macro base station 40 to the femto base station 10. The packet (forward packet) forwarded from the macro base station 40 to the femto base station 10 involved with the X2 handover is used for measuring the communication quality and obtained by the mobile station U4 after the handover in the femto base station 10 serving as a handover destination. This enables the mobile station U4 to perform packet communication under the femto base station 10 through the wired broadband connection N1 having high communication quality. As a result, the deterioration of the communication quality can be suppressed in the wireless communications system 1.

If the quality of the wired broadband connection N1 is poor, the femto base station 10 automatically controls the amount of the transmission power using the self organizing network (SON) function of the LTE. That is, the femto base station 10 reduces its own transmission power and lowers the reception radio wave intensity of the mobile station that communicates with the femto base station 10, thereby causing the mobile station U4 under the macro base station 40 to continue the communication. In other words, the femto base station 10 prevents the mobile station U4 from performing the handover, thereby facilitating the packet communication under the area of the macro base station 40. As a result, the handover to the wired broadband connection N1 having poor communication quality is avoided. The forward packet is used for measuring the communication quality in the femto base station 10, then forwarded from the femto base station 10 to the macro base station 40, and obtained by the mobile station U4 in the macro base station 40 serving as a handover source. This enables the mobile station U4 to perform packet communication under the macro base station 40 not through the wired broadband connection N1 having poor communication quality. As a result, the deterioration of the communication quality can be suppressed in the wireless communications system 1 in both of the above-described cases.

Now assuming that the mobile station U1 exists under the area of femto base station 10, the following describes a mode in which the femto base station 10 determines the availability of handover from the mobile station U1 based on the line quality information in the up direction. When the mobile station U1 tries to perform handover from the femto base station 10 to the macro base station 40, the femto base station 10 determines the quality of the wired broadband connection N1 based on the line quality information obtained from a forward packet that occurs together with the trial of the handover. As a result of the determination, if the quality of the line is good, the femto base station 10 notifies the mobile station U1, the femto base station 20, for example, of the line quality information using the method explained in the description of the second operation. The mobile station U1 continues the communication with the femto base station 10. The forward packet is used for measuring the communication quality in the SeGW 50 and then forwarded from the SeGW 50 (or the macro base station 40) to the femto base station 10. The forward packet is obtained by the mobile station U1 in the femto base station 10 serving as a handover source. This enables the mobile station U1 to perform packet communication under the femto base station 10 through the wired broadband connection N1 having high communication quality. As a result, the deterioration of the communication quality can be suppressed in the wireless communications system 1.

If the quality of the wired broadband connection N1 is poor, the femto base station 10 reduces its own transmission power and lowers the reception radio wave intensity of the mobile station U1 that communicates with the femto base station 10, thereby facilitating the handover to the macro base station 40. In other words, the femto base station 10 instructs the mobile station U1 to evacuate from the femto base station 10 to the macro base station 40. This achieves the X2 handover to the macro base station 40 having a good communication quality. The packet (forward packet) forwarded from the femto base station 10 to the macro base station 40 involved with the X2 handover is used for measuring the communication quality in the SeGW 50 and obtained by the mobile station U1 after the handover in the macro base station 40 serving as a handover destination. This enables the mobile station U1 to perform packet communication under the macro base station 40 not through the wired broadband connection N1 having poor communication quality. As a result, the deterioration of the communication quality can be suppressed in the wireless communications system 1 in both of the above-described cases.

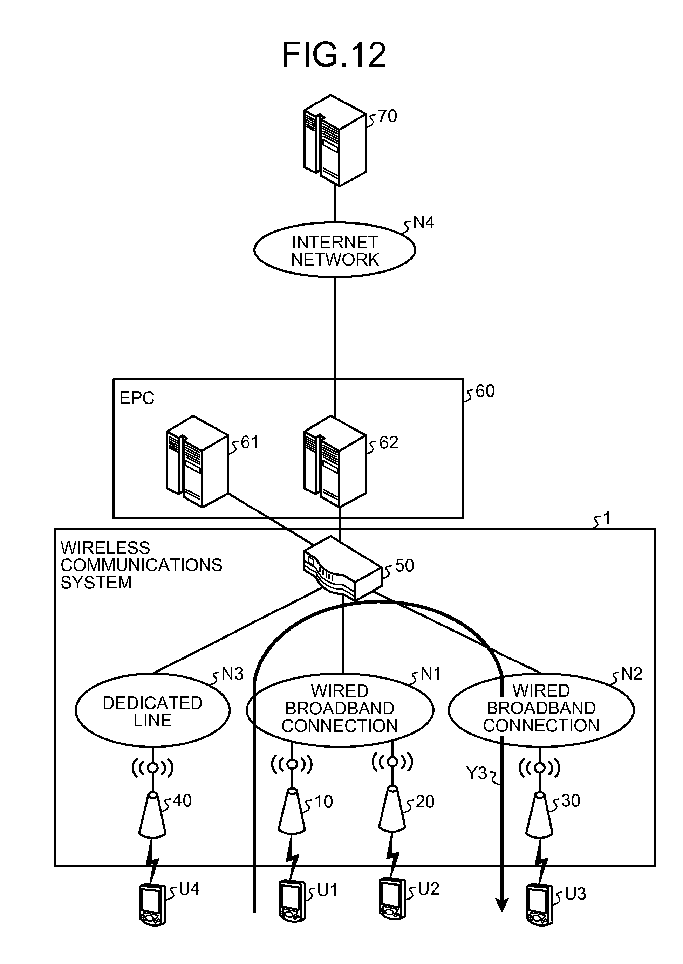

The base station to which the mobile station U1 performs the handover as an evacuation destination is not limited to the macro base station 40 and another femto base station can be used. That is, the handover destination of the mobile station U1 may be any base station (e.g., the femto base station 30) as long as it is expected that the quality of the communication with the base station is higher than that of the femto base station 10 based on the line quality information. If the communication quality of the wired broadband connection N1 is poor, the transmission power is reduced in not only the femto base station 10 but also the femto base station 20 coupled to the same line, the mobile station U1 therefore does not perform handover to the femto base station 20. For example, when the mobile station U1 performs a handover to the femto base station 30 involved with the reduction of the transmission power in the femto base station 10, the forward packet used for measuring the communication quality reaches the mobile station U1 after the handover through the route represented with Arrow Y3 illustrated in FIG. 12. As described above, when the mobile station U1 receives the forward packet, the time stamp provided to the forward packet by the femto base station 10 is deleted by the SeGW 50. The mobile station U1 can therefore receive the same forward packet as the packet that was to be originally received from the femto base station 10 under the area of the femto base station 30 having higher communication quality.

The transmission power of the femto base station having poor communication quality is controlled to be reduced as follows, for example. The femto base station 10 reduces the transmission power in a step-by-step manner so that the value of the transmission power after the reduction becomes half as large as the current value of the transmission power. Specifically, the femto base station 10 determines the availability of the handover of the mobile station U1 based on an RRC measurement report transmitted from the mobile station U1. As a result of the determination, if the handover is available, the femto base station 10 performs the handover of the mobile station U1 to another femto base station (e.g., the femto base station 30). If the handover is not available, the femto base station 10 reduces again the transmission power to the half of its value, and then determines the availability of the handover of the mobile station U1 based on the RRC measurement report transmitted from the mobile station U1. As a result of the determination, if the handover is available, the femto base station 10 performs the handover of the mobile station U1 to another femto base station. If the handover is not available, the femto base station 10 repeats the above-described processing until the handover of the mobile station U1 becomes available. The mobile station completes the handover (evacuation) from the base station having poor communication quality to another base station.

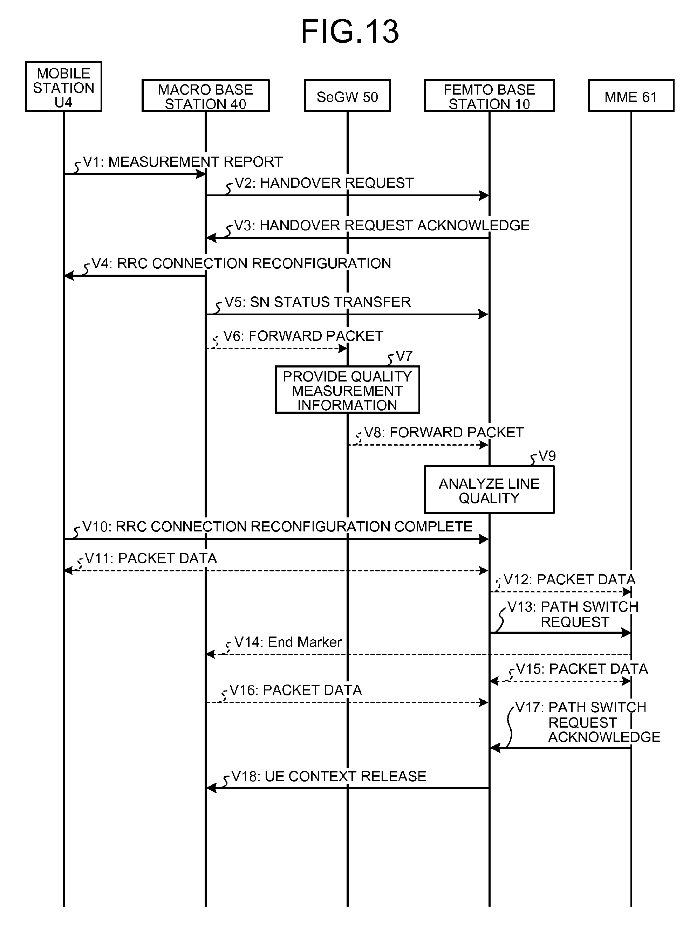

The X2 handover according to the present embodiment is described in more detail with reference to FIGS. 13 to 19. The following firstly describes the measurement processing of the communication quality in the down direction when the mobile station U4 performs the X2 handover from the macro base station 40 to the femto base station 10, with reference to FIG. 13.

### (Operations before X2 Handover)

The mobile station U4 transmits a MEASUREMENT REPORT signal to the macro base station 40 (V1). The macro base station 40 receives the signal and transmits a signal (HANDOVER REQUEST signal) that delivers a request of the X2 handover to the femto base station 10 serving as a handover destination (V2). This makes the packet of the user data (U-Plane data) be transmitted and received between the mobile station U4 and the SeGW 50 through the macro base station 40. After receiving the HANDOVER REQUEST signal at V2, the femto base station 10 returns a signal (HANDOVER REQUEST ACKNOWLEDGE signal) that delivers an acknowledgement response to the request of the X2 handover to the macro base station 40 serving as a base station of a handover source (V3). The macro base station 40 receives the HANDOVER REQUEST ACKNOWLEDGE signal from the femto base station 10 and then transmits an RRC CONNECTION RECONFIGURATION signal to the mobile station U4 (V4). This sets a packet forwarding path from the macro base station 40 to the femto base station 10. At this time, the transmission and reception of the U-Plane data between the mobile station U4 and the SeGW 50 is being continued.

### (Operations before Switching Cells)

At V5, the macro base station 40 transmits an SN STATUS TRANSFER signal to the femto base station 10, and then transmits the forward packet to the SeGW 50 (V6). The SeGW 50 provides quality measurement information (a time stamp) to the IP header of the received forward packet (V7), and forwards the forward packet to the femto base station 10 (V8). The femto base station 10 analyzes the line quality in the down direction of the wired broadband connection N1 based on the above-described communication quality measurement result (V9). The femto base station 10 performs buffering of the forward packet as the U-Plane data.

### (Operations after Switching Cells and before Switching Paths)

At V10, the mobile station U4 transmits an RRC CONNECTION RECONFIGURATION COMPLETE signal as an acknowledgement response to the RRC CONNECTION RECONFIGURATION signal received at V4 to the femto base station 10. The packet data is transmitted and received between the mobile station U4 and the femto base station 10 (V11) and transmitted from the femto base station 10 to the MME 61 (V12). Specifically, uploaded data is transmitted from the mobile station U4 to the SeGW 50 through the femto base station 10, and downloaded data is transmitted from the macro base station 40 to the mobile station U4 through the femto base station 10.

### (Operations after Switching Paths)

At V13, when a PATH SWITCH REQUEST signal is transmitted from the femto base station 10 to the MME 61, the MME 61 transmits an End Marker signal to the macro base station 40 (V14). This makes the forward packet as the U-Plane data be transmitted and received between the mobile station U4 and the SeGW 50 through the femto base station 10. The packet data is transmitted and received between the femto base station 10 and the MME 61 (V15), and transmitted from the macro base station 40 to the femto base station 10 (V16). That is, the femto base station 10 prioritizes the forwarding of the data forwarded from the macro base station 40 over the newly received downloaded data to the mobile station U4.

### (Operations after Handover Completion)

The MME 61 transmits a PATH SWITCH REQUEST ACKNOWLEDGE signal as the acknowledgement response to the PATH SWITCH REQUEST signal received at V13 to the femto base station 10 (V17), then the femto base station 10 transmits a UE CONTEXT RELEASE signal to the macro base station 40 (V18). This completes the transfer of the whole of the packet data from the macro base station 40, whereby the packet forwarding path is released. Subsequently, the U-Plane data is transmitted and received between the mobile station U4 and the SeGW 50 through the femto base station 10.

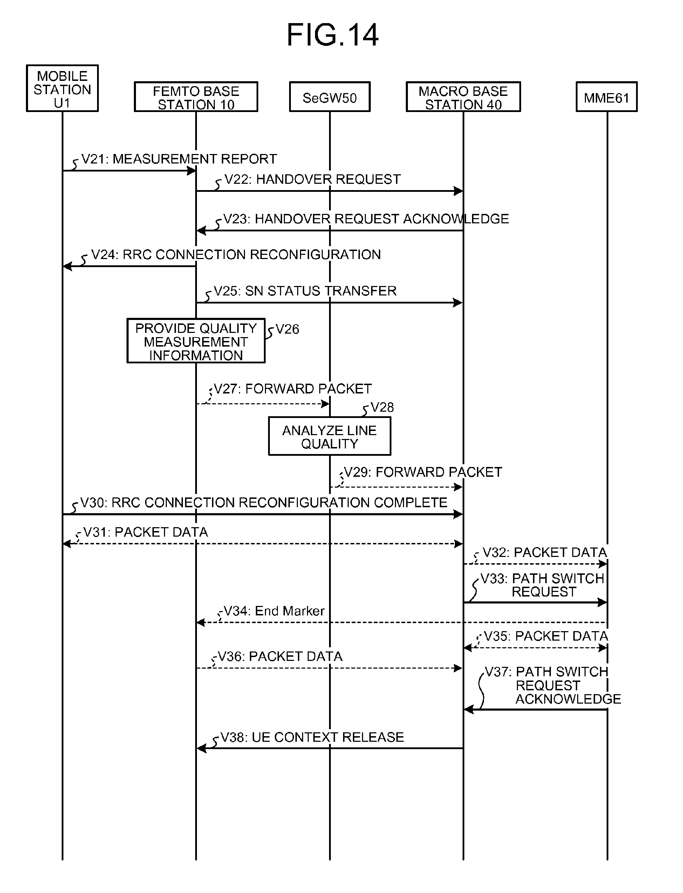

The following describes the measurement processing of the communication quality in the up direction when the mobile station U1 performs the X2 handover from the femto base station 10 to the macro base station 40 with reference to FIG. 14.

(Operations before X2 Handover)

The mobile station U1 transmits a MEASUREMENT REPORT signal to the femto base station 10 (V21). The femto base station 10 receives the signal and transmits a signal that delivers a request of the X2 handover (HANDOVER REQUEST signal) to the macro base station 40 serving as a handover destination (V22). This makes the U-Plane data be transmitted and received between the mobile station U1 and the SeGW 50 through the femto base station 10. After receiving the HANDOVER REQUEST signal at V22, the macro base station 40 returns a signal that delivers an acknowledgement response to the request of the X2 handover (HANDOVER REQUEST ACKNOWLEDGE signal) to the femto base station 10 serving as a base station of a handover source (V23). The femto base station 10 receives the HANDOVER REQUEST ACKNOWLEDGE signal from the macro base station 40 and then transmits an RRC CONNECTION RECONFIGURATION signal to the mobile station U1 (V24). This sets a packet forwarding path from the femto base station 10 to the macro base station 40. At this time, the transmission and reception of the U-Plane data between the mobile station U1 and the SeGW 50 is being continued.

### (Operations before Switching Cells)

At V25, the femto base station 10 transmits an SN STATUS TRANSFER signal to the macro base station 40, provides quality measurement information (a time stamp) to the IP header of the forward packet for the mobile station U1 (V26), and then transmits the forward packet to the SeGW 50 (V27). The SeGW 50 analyzes the line quality in the up direction of the wired broadband connection N1 based on the above-described communication quality measurement result (V28). After the analysis, the SeGW 50 transmits the above-described forward packet to the macro base station 40 (V29). The macro base station 40 performs buffering of the forward packet as the U-Plane data.

### (Operations after Switching Cells and before Switching Paths)

At V30, the mobile station U1 transmits an RRC CONNECTION RECONFIGURATION COMPLETE signal as an acknowledgement response to the RRC CONNECTION RECONFIGURATION signal received at V24 to the macro base station 40. The packet data is transmitted and received between the mobile station U1 and the macro base station 40 (V31) and transmitted from the macro base station 40 to the MME 61 (V32). Specifically, uploaded data is transmitted from the mobile station U1 to the SeGW 50 through the macro base station 40, and downloaded data is transmitted from the femto base station 10 to the mobile station U1 through the macro base station 40.

### (Operations after Switching Paths)

At V33, when the PATH SWITCH REQUEST signal is transmitted from the macro base station 40 to the MME 61, the MME 61 transmits an End Marker signal to the femto base station 10 (V34). This makes the forward packet as the U-Plane data be transmitted and received between the mobile station U1 and the SeGW 50 through the macro base station 40. The packet data is transmitted and received between the macro base station 40 and the MME 61 (V35), and transmitted from the femto base station 10 to the macro base station 40 (V36). That is, the macro base station 40 prioritizes forwarding of the data forwarded from the femto base station 10 over the newly received downloaded data to the mobile station U1.

### (Operations after Handover Completion)

The MME 61 returns a PATH SWITCH REQUEST ACKNOWLEDGE signal as the acknowledgement response to the PATH SWITCH REQUEST signal received at V33 to the macro base station 40 (V37). The macro base station 40 transmits a UE CONTEXT RELEASE signal to the femto base station 10 (V38). This completes the transfer of the whole of the packet data from the femto base station 10, whereby the packet forwarding path is released. Subsequently, the U-Plane data is transmitted and received between the mobile station U1 and the SeGW 50 through the macro base station 40.

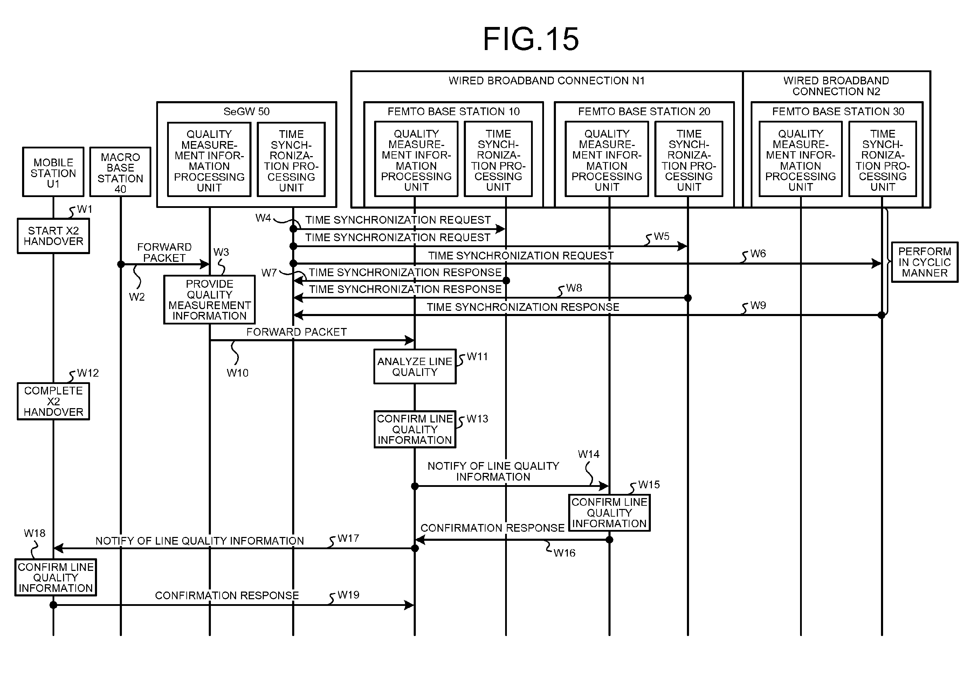

The following describes the measurement processing of the line quality in the down direction with reference to FIG. 15. FIG. 15 is a diagram for explaining the measurement processing of the line quality in the down direction when the X2 handover from the macro base station 40 to the femto base station 10 occurs.

When the mobile station U1 starts the X2 handover (W1), the macro base station 40 transmits the forward packet to the SeGW 50 (W2). The SeGW 50 receives the forward packet from the macro base station 40 and then provides quality measurement information to the packet (W3). In addition, the SeGW 50 synchronizes the femto base stations 10, 20, and 30 based on the transmission and reception of a time synchronization request signal and its response signal in a cyclic manner (W4 to W9). When the femto base station 10 receives the forward packet to which the quality measurement information is provided from the SeGW 50 (W10), the femto base station 10 analyzes the line quality in the down direction of the wired broadband connection N1 based on the above-described communication quality measurement result (W11).

When the mobile station U1 completes the X2 handover (W12), the femto base station 10 confirms the above-described line quality information (W13), and notifies the femto base station 20 of the line quality information (W14). In the same manner, the femto base station 20 also confirms the above-described line quality information (W15) and then returns a confirmation response to the femto base station 10 (W16). Also in the same manner, the femto base station 10 notifies the mobile station U1 of the above-described line quality information (W17). The mobile station U1 confirms the line quality information (W18) and then returns a confirmation response to the femto base station 10 (W19).

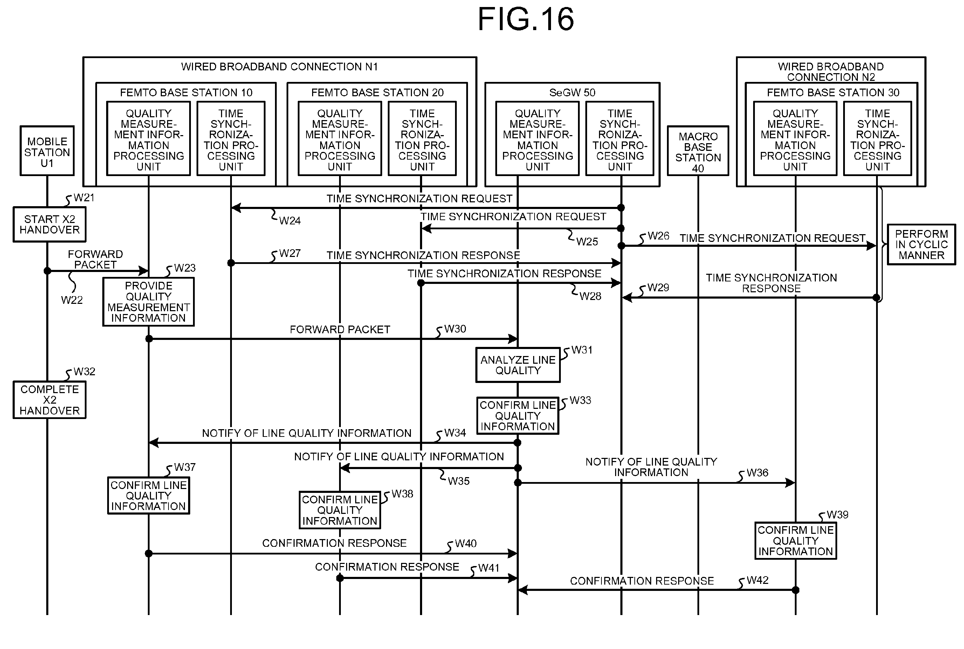

The following describes the measurement processing of the line quality in the up direction with reference to FIG. 16. FIG. 16 is a diagram for explaining the measurement processing of the line quality in the up direction when the X2 handover from the femto base station 10 to the macro base station 40 occurs.

When the mobile station U1 starts the X2 handover (W21), the mobile station U1 transmits the forward packet to the femto base station 10 (W22). The femto base station 10 receives the forward packet from the mobile station U1 and then provides the quality measurement information to the packet (W23). The SeGW 50 synchronizes the femto base stations 10, 20, and 30 based on the transmission and reception of the time synchronization request signal and its response signal in a cyclic manner (W24 to W29). When the SeGW 50 receives the forward packet to which the quality measurement information is provided from the femto base station 10 (W30), the SeGW 50 analyzes the line quality in the up direction of the wired broadband connection N1 based on the above-described communication quality measurement result (W31).

When the mobile station U1 completes the X2 handover (W32), the SeGW 50 confirms the above-described line quality information (W33), and notifies the femto base stations 10, 20, and 30 of the line quality information (W34, W35, and W36). In the same manner, the femto base stations 10, 20, and 30 also confirm the above-described line quality information notified respectively by the SeGW 50 (W37, W38, and W39) and then return confirmation responses to the SeGW 50 (W40, W41, and W42).

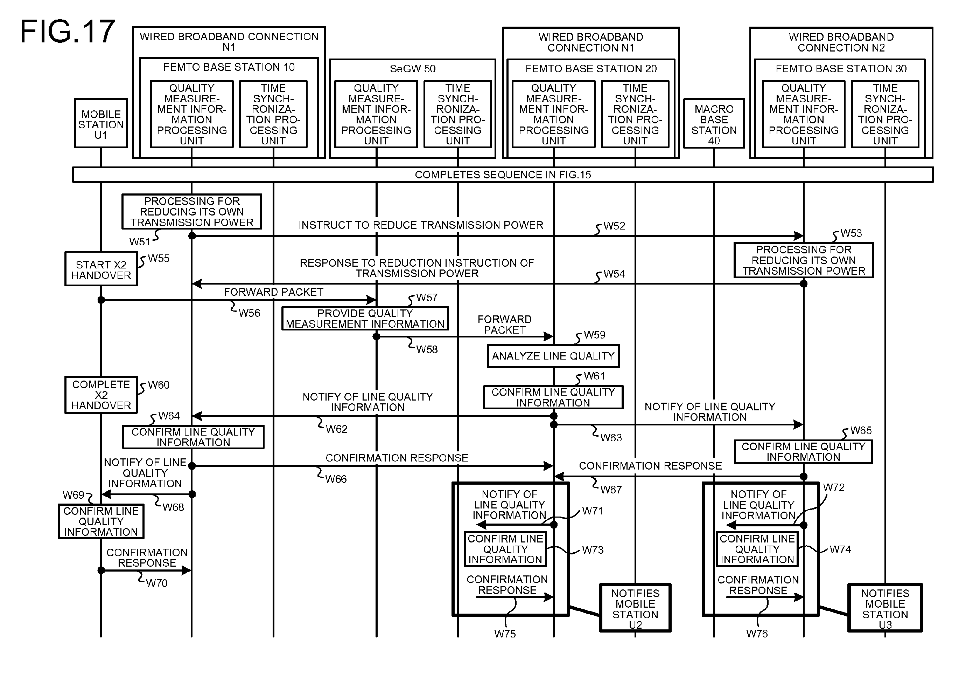

The following describes processing of the mobile station U1 to perform the X2 handover from the femto base station 10 to the femto base station 20 based on the measurement result of the line quality with reference to FIG. 17. When the measurement processing of the line quality in the down direction illustrated in FIG. 15 is completed, the femto base station 10 performs processing for reducing its own transmission power (W51) and instructs the femto base station 30 to reduce its transmission power (W52). The femto base station 30 receives the instruction and perform processing for reducing its own transmission power in the same manner as the femto base station 10 (W53), and returns a response to the reduction instruction of the transmission power at W52 to the femto base station 10 (W54). This makes the transmission power of the femto base station 20, which has not been reduced, relatively higher among the transmission power of the femto base stations 10, 20, and 30, and the macro base station 40, which are potential handover destinations of the mobile station U1.

When the mobile station U1 starts the X2 handover (W55), the mobile station U1 transmits the forward packet to the SeGW 50 (W56). The SeGW 50 receives the forward packet from the mobile station U1 and then provides quality measurement information to the packet (W57). When the femto base station 20 receives the forward packet to which the quality measurement information is provided from the SeGW 50 (W58), the femto base station 20 analyzes the line quality in the down direction of the wired broadband connection N1 based on the above-described communication quality measurement result (W59).

When the mobile station U2 completes the X2 handover (W60), the femto base station 20 confirms the above-described line quality information (W61), and notifies other femto base stations 10 and 30 of the line quality information (W62 and W63). In the same manner, the femto base stations 10 and 30 also confirm the above-described line quality information notified respectively by the femto base station 20 (W64 and W65) and then return confirmation responses to the femto base station 20 (W66 and W67). When the femto base station 10 receives the notification of the line quality information from the femto base station 20, the femto base station 10 notifies mobile station U1 accommodated in the femto base station 10 itself of the line quality information (W68). After the mobile station U1 confirms the line quality information notified by the femto base station 10 (W69), the mobile station U1 returns its response to the femto base station 10 (W70). In the same manner, the femto base stations 20 and 30 also notify the mobile stations U2 and U3 respectively under the respective base stations of the line quality information (W71 and W72). The mobile stations U2 and U3 that have received the notification confirm the line quality information distributed by the respective base stations to which they are coupled (W73 and W74), and then return their response to the femto base stations 20 and 30 respectively (W75 and W76).

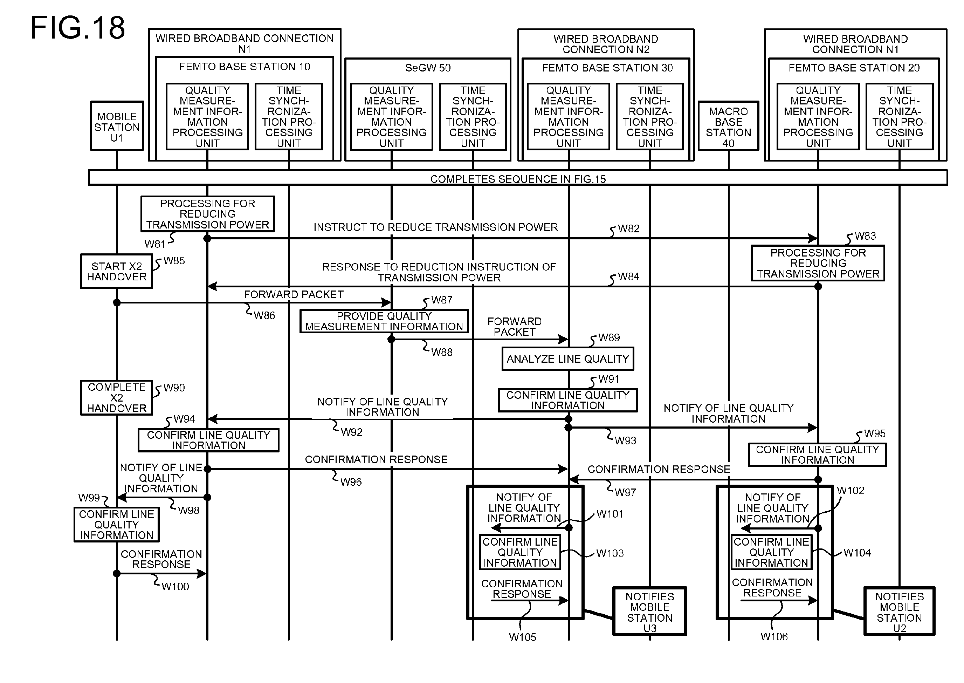

The following describes processing of the mobile station U1 to perform the X2 handover from the femto base station 10 to the femto base station 30 based on the measurement result of the line quality with reference to FIG. 18. When the measurement processing of the line quality in the down direction illustrated in FIG. 15 is completed, the femto base station 10 performs processing for reducing its own transmission power (W81) and instructs the femto base station 20 to reduce its transmission power (W82). The femto base station 20 receives the instruction and performs processing for reducing its own transmission power in the same manner as the femto base station 10 (W83), and returns a response to the reduction instruction of the transmission power at W82 to the femto base station 10 (W84). This makes the transmission power of the femto base station 30, which has not been reduced, relatively higher among the transmission power of the femto base stations 10, 20, and 30, and the macro base station 40, which are potential handover destinations of the mobile station U1. This facilitates the handover to the femto base station 30.

When the mobile station U1 starts the X2 handover (W85), the mobile station U1 transmits the forward packet to the SeGW 50 (W86). The SeGW 50 receives the forward packet from the mobile station U1 and then provides the quality measurement information to the packet (W87). When the femto base station 30 receives the forward packet to which the quality measurement information is provided from the SeGW 50 (W88), the femto base station 30 analyzes the line quality in the down direction of the wired broadband connection N1 based on the above-described communication quality measurement result (W89).

When the mobile station U1 completes the X2 handover (W90), the femto base station 30 confirms the above-described line quality information (W91), and notifies other femto base stations 10 and 20 of the line quality information (W92 and W93). In the same manner, the femto base stations 10 and 20 also confirm the above-described line quality information notified respectively by the femto base station 30 (W94 and W95) and then return confirmation responses to the femto base station 30 (W96 and W97).

When the femto base station 10 receives the notification of the line quality information from the femto base station 30, the femto base station 10 notifies the mobile station U1 accommodated in the femto base station 10 itself of the line quality information (W98). After the mobile station U1 confirms the line quality information notified by the femto base station 10 (W99), the mobile station U1 returns its response to the femto base station 10 (W100). In the same manner, the femto base stations 30 and 20 also notify the mobile stations U3 and U2 respectively under the respective base stations of the line quality information (W101 and W102). The mobile stations U3 and U2 that have received the notification confirm the line quality information distributed by the respective base stations to which they are coupled (W103 and W104), and then return their response to the femto base stations 30 and 20 respectively (W105 and W106).

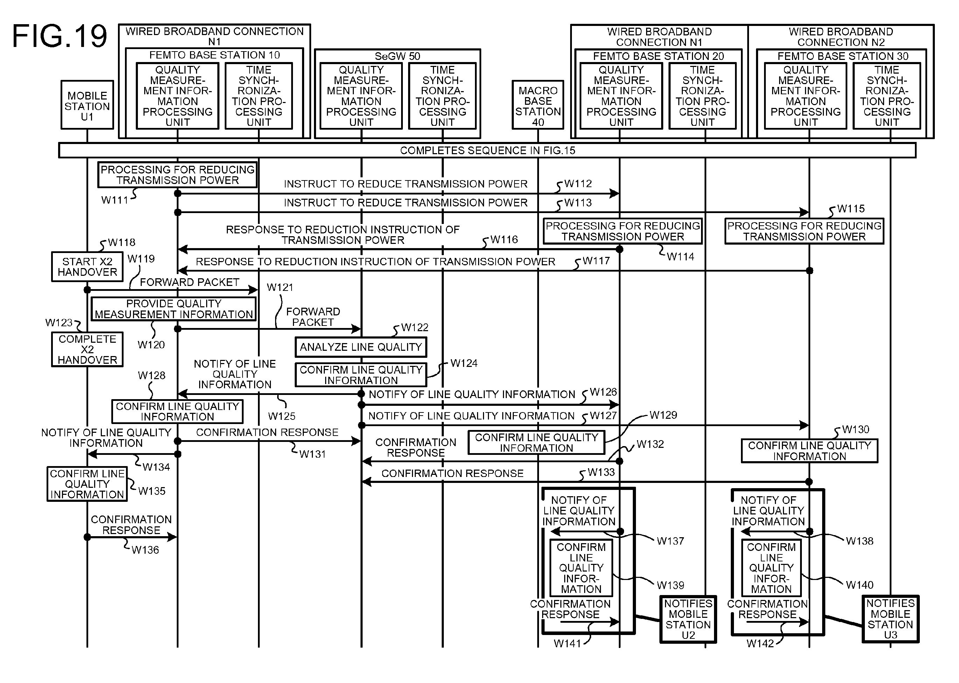

The following describes processing of the mobile station U1 to perform the X2 handover from the femto base station 10 to the macro base station 40 based on the measurement result of the line quality with reference to FIG. 19. When the measurement processing of the line quality in the down direction illustrated in FIG. 15 is completed, the femto base station 10 performs processing for reducing its own transmission power (W111) and instructs the femto base stations 20 and 30 to reduce their transmission power (W112 and W113). The femto base stations 20 and 30 receive the instruction and perform processing for reducing their own transmission power in the same manner as the femto base station 10 (W114 and W115), and return their responses to the reduction instructions of the transmission power at W112 and W113 to the femto base station 10 (W116 and W117). This makes the transmission power of the macro base station 40, which has not been reduced, relatively higher among the transmission power of the femto base stations 10, 20, and 30, and the macro base station 40, which are potential handover destinations of the mobile station U1. This facilitates the handover to the macro base station 40.

When the mobile station U1 starts the X2 handover (W118), the mobile station U1 transmits the forward packet to the femto base station 10 (W119). The femto base station 10 receives the forward packet from the mobile station U1 and then provides quality measurement information to the packet (W120). When the SeGW 50 receives the forward packet to which the quality measurement information is provided from the Femto base station 10 (W121), the SeGW 50 analyzes the line quality in the down direction of the wired broadband connection N1 based on the above-described communication quality measurement result (W122).

When the mobile station U1 completes the X2 handover (W123), the SeGW 50 confirms the above-described line quality information (W124), and notifies other femto base stations 10, 20, and 30 of the line quality information (W125, W126, and W127). In the same manner, the femto base stations 10 and 30 and the macro base station 40 also confirm the above-described line quality information notified respectively by the SeGW 50 (W128, W129, and W130) and then return their confirmation responses to the femto base station 30 (W131, W132, and W133).

When the femto base station 10 receives the notification of the line quality information from the SeGW 50, the femto base station 10 notifies the mobile station U1 accommodated in the femto base station 10 itself of the line quality information (W134). After the mobile station U1 confirms the line quality information notified by the femto base station 10 (W135), the mobile station U1 returns its response to the femto base station 10 (W136). In the same manner, the femto base stations 20 and 30 also notify the mobile stations U2 and U3 under the respective base stations of the line quality information (W137 and W138). The mobile stations U2 and U3 that have received the notification confirm the line quality information distributed by the respective base stations to which they are coupled (W139 and W140), and then return their responses to the femto base stations 20 and 30 respectively (W141 and W142).

The series of operations described above enables the mobile station U1 to complete handover to the base station with the best communication quality, and other base stations and mobile stations to keep themselves informed in real time on the quality of the wired line to which the femto base station accommodating the mobile station U1 is coupled. The base stations therefore can perform handover of the mobile station to the base station with better communication quality, thus the mobile stations can communicate with the base station with better communication quality. As a result, the wireless communications system 1 can suppress the deterioration of the communication quality due to the wired line congestion.

As described above, the wireless communications system 1 includes the SeGW 50, the femto base station 10, and the macro base station 40. The SeGW 50 is coupled to a higher-level station. The femto base station 10 is coupled to the SeGW 50 through the wired broadband connection N1. The macro base station 40 is coupled to the SeGW 50 through the dedicated line N3. When the mobile station U4 performs a handover from the macro base station 40 to the femto base station 10, the femto base station 10 measures the quality of the wired broadband connection N1 using first time information and second time information. The first time information represents the time of data transmission from the macro base station 40 to the femto base station 10. The second time information represents the time of reception of the data.

More specifically, for the line quality in the down direction, when the mobile station U4 performs a handover from the macro base station 40 to the femto base station 10, the femto base station 10 measures the quality of the wired broadband connection N1 using the first time information and the second time information. The first time information represents the time when the SeGW 50 transmits the data to be forwarded from the macro base station 40 to the femto base station 10. The second time information represents the time when the femto base station 10 receives the data.

For the line quality in the up direction, when the mobile station U1 performs a handover from the femto base station 10 to the macro base station 40, the SeGW 50 measures the quality of the wired broadband connection N1 using the first time information and the second time information. The first time information represents the time when the femto base station 10 transmits the data to be forwarded from the femto base station 10 to the macro base station 40. The second time information represents the time when the SeGW 50 receives the data.

The wireless communications system 1 according to the present embodiment can provide the following advantageous effects. Firstly, in a method with which the communication quality is determined based on the session state of an SGW or an EPC of an operator's network, the communication quality is detected triggered by a line disconnect. The deterioration (fluctuation) of the communication quality until the line disconnect therefore is difficult to be detected. In addition, in the above-described method, control is not possible on a mobile station existing under the area of a femto cell after the line disconnect. Furthermore, in the above-described method, because the deterioration of the communication quality is triggered by a line disconnect, the section causing a fault is difficult to be identified and isolated. By contrast, the wireless communications system 1 according to the present embodiment adopts the measurement method of the communication quality in which a transmitting device (the SGW or the femto base station) provides a time stamp to a forward packet when an X2 handover is performed, and a receiving device (the femto base station or the SGW) compares the time stamp and the reception time. This enables the wireless communications system 1 to detect the deterioration of the communication quality including fluctuation based on the communication quality of the forward packet when the X2 handover is performed. Because the session is maintained after the deterioration of the communication quality is found, the wireless communications system 1 can control the mobile station under the area of the femto cell to perform handover still after line disconnect. In addition, in the wireless communications system 1, the communication quality between the femto base station and the SGW is measured, the wireless communications system 1 thus can identify the targeted section of the wired broadband connection for measurement as a failure factor and isolate the section as necessary.

Secondly, quality measurement methods of the wired broadband connection commonly used include a measurement method in which a specialized server device is provided on the Internet and a subscriber terminal performs packet communication with the server device, thereby measuring the communication quality. In such a method, however, a large amount of load is applied to the wired broadband connection shared with a large number of subscriber terminals for the measurement. This may cause issues such as reduction of the communication quality due to the communication quality measurement. By contrast, the wireless communications system 1 measures the communication quality by using existing data (forward packet) originally needed for performing the X2 handover, thus no load is additionally applied to the network involved with the quality measurement. As a result, the quality deterioration of the wired broadband connection can be suppressed.

Furthermore, other measurement methods of the communication quality include a method in which the communication quality is measured using user equipment (UE) data traffic information of a femto cell. In this method, a femto base station measures the communication quality using the data traffic information (e.g., average throughput) of the mobile station communicating within the area of the femto cell. The data traffic information of the mobile station, however, often changes depending on communication settings or communication content in the mobile station. Therefore, accurate measurement of the communication quality is difficult to be always performed. By contrast, the communication quality of the wired broadband connection measured by the wireless communications system 1 is the quality of data communication with the macro base station coupled through the dedicated line. The communication environment and communication conditions of the dedicated line are maintained independent of communication settings or communication content of the mobile station. Accordingly, unlike the above-described method, the data traffic information does not change depending on communication settings or communication content of the mobile station, whereby stable measurement of the communication quality can be performed. As a result, the reliability of the measurement result is increased.

The quality measurement of the wired line according to the above-described present embodiment is preferably performed in the handover between the femto base station and the macro base station. That is, when the present embodiment is applied to the handover between femto base stations, the deterioration of the communication quality may be caused by deterioration of the quality of the wired line to which one or more of other femto base stations to which the mobile station does not perform the handover are coupled. If the handover is performed between the femto base station and the macro base station, a dedicated line always having high communication quality is coupled to the macro base station. Therefore, the influence from other lines (lines not to be measured) on the measurement of the communication quality can be excluded. For example, when the present embodiment is applied to the handover from the femto base station 30 to the femto base station 10, it can be hardly determined that the above-described communication quality measurement result is simply caused by the communication state of the wired broadband connection N1, or also by the communication state of the wired broadband connection N2. By contrast, when the present embodiment is applied to the handover from the macro base station 40 coupled to the dedicated line N3 to the femto base station 10, as described above, it is obvious that the communication quality measurement result reflects only the communication state of the wired broadband connection N1. As a result, the above-described issue is solved. That is, the wireless communications system 1 preferably measures the communication quality of wired lines only if a macro base station (e.g., the macro base station 40) is recognized as a neighboring cell of a femto base station (e.g., the femto base station 10). This prevents the reduction of the measurement accuracy concerned when measuring the communication quality of a wired line between the femto base stations. Therefore, the wireless communications system 1 can always maintain high accuracy of quality measurement. As a result, the mobile station can select a base station having really high communication quality among base stations with which handover is available, and then communicate with the selected base station.

### [Explanation of Reference]

- 1: wireless communications system
- 10, 20, 30: femto base station
- 10a: interface
- 10b: CPU
- 10c: SDRAM
- 10d: FPGA
- 10e: DSP
- 10f: DAC/ADC
- 10g: frequency converter
- 10h: radio frequency circuit
- 10i: antenna
- 11: wireless interface (IF) unit
- 12: control signal processing unit
- 13: user data processing unit
- 14: control unit
- 15: quality measurement information processing unit
- 16: time synchronization processing unit
- 17: X2 IF unit
- 18: S1 IF unit
- 40: macro base station
- 41: wireless IF unit
- 42: control unit
- 43: X2 IF unit
- 44: S1 IF unit
- 50: SeGW
- 51: quality measurement information processing unit
- 52: time synchronization processing unit
- 53: GW function unit
- 50a: switch
- 50b: CPU
- 50c: SDRAM
- 50d: HDD
- 50e: network board
- F1 to F6: forward packet
- N1, N2: wired broadband connection
- N3: dedicated line
- P1: IP header
- T1: communication quality measurement table
- T2: line quality information

## Claims

1. A wireless communications system comprising:
a gateway coupled to a higher-level station;
a first base station coupled to the gateway through a first line; and
a second base station coupled to the gateway through a second line, wherein
when a mobile station performs a handover from the first base station to the second base station, the gateway or the second base station measures quality of a line, using first time information representing a time when data forwarded from the first base station to the second base station is transmitted and second time information representing a time when the data is received.

2. The wireless communications system according to claim 1, wherein when a mobile station performs a handover from the first base station to the second base station, the second base station measures the quality of the second line using first time information representing a time when the gateway transmits data forwarded from the first base station to the second base station and second time information representing a time when the second base station receives the data.

3. The wireless communications system according to claim 1, wherein when a mobile station performs a handover from the first base station to the second base station, the gateway measures the quality of the first line using first time information representing a time when the first base station transmits data forwarded from the first base station to the second base station and second time information representing a time when the gateway receives the data.

4. A base station that is coupled to a first base station coupled to a gateway through a first line, through a gateway coupled to a higher-level station, the base station being a second base station coupled to the gateway through a second line, wherein
when a mobile station performs a handover from the first base station to the second base station, the base station measures quality of a line, using first time information representing a time when data forwarded from the first base station to the second base station is transmitted and second time information representing a time when the data is received.

5. A gateway coupled to a higher-level station, the gateway relaying a first base station coupled to a gateway through a first line and a second base station coupled to the gateway through a second line, wherein
when a mobile station performs a handover from the first base station to the second base station, the gateway measures quality of a line, using first time information representing a time when data forwarded from the first base station to the second base station is transmitted and second time information representing a time when the data is received.

6. A wireless communications method in a wireless communications system that comprises:
a gateway coupled to a higher-level station;
a first base station coupled to the gateway through a first line; and
a second base station coupled to the gateway through a second line, wherein
when a mobile station performs a handover from the first base station to the second base station, the gateway or the second base station measures quality of a line, using first time information representing a time when data forwarded from the first base station to the second base station is transmitted and second time information representing a time when the data is received.
